# EUROPEAN PATENT APPLICATION

(11) **EP 3 656 808 A1**
(43) Date of publication of application: **27.05.2020**
(21) Application number: 18460067.4
(22) Date of filing: 23.11.2018
(51) Int. Cl.: C08J 7/04

(54) **THE METHOD OF COATING ALUMINIUM OXIDE SPUTTERED PLASTIC FILM**

(71) Applicant: Eurocast Sp. z o.o., 84-220 Strzebielino (PL)
(72) Inventor: Dziadowiec, Damian, 80-180 Borkowo (PL); Szymczak, Piotr, 81-601 Gdynia (PL)
(74) Representative: Czabajski, Jacek

(57) **Abstract**

The method of coating an aluminium oxide sputtered plastic film relates to the process in which a film with a high-barrier aluminium oxide sputtered coating is coated in a rotogravure process with a coating of a protective substance. The protective substance is a mixture of a solid in the form of urethane compounds in the amount of 5% to 50% and water in the amount of 50% to 95%. The coated film is heated to evaporate excess water. Before the coating process, isopropyl alcohol in the amount of 1% to 15% and an adhesion promoter in the amount of 0.5% to 5% are added to the mixture of the protective substance and water, where the adhesion promoter is a mixture of 3-(2,3-epoxypropyl)-propyltrimethoxysilane with methanol in the ratio of 97:3 to 99.5:0.5. The film with the coating substance applied is heated at a temperature from 100°C to 110°C for 0.5 to 5 seconds. After heating, the film coated with a dried layer of the protective substance is seasoned at a temperature from 35°C to 65°C for 24 to 160 hours.

## Description

The invention relates to the method of coating an aluminium oxide sputtered plastic film with a protective layer. Films are used especially in the food industry.

A high-barrier coating contains a base in the form of a plastic film with AlOx aluminium oxides sputtered in the first stage. The film is subjected to a coating process for the purpose of protecting and/or increasing the barrier properties of sputtered aluminium oxides (AlOx). The bases to which the coating, according to the invention, may be applied are the following types of films: CPP - CAST polypropylene film, BOPP - biaxially oriented polypropylene film, PE - polyethylene film, OPE - oriented polyethylene film, BOPET - biaxially oriented polyester film, BOPA - biaxially oriented polyamide film. The thicknesses of films intended for the technological process to which the invention relates range from 6 to 100 micrometres.

The patent specification of the solution known from patent document No. PL 227613 discloses a high-barrier copolymer- and polypropylene homopolymer-based film, sputtered with aluminium oxides, in order to obtain high-barrier properties to oxygen and water vapour. This solution is an alternative to known PET or PVDC barrier films. According to this known solution, the multilayer barrier film contains two surface layers of a polypropylene copolymer containing ethylene inclusions and one middle layer. The first outer surface layer of the film is a layer of polypropylene copolymer with a thickness of 10% to 30% of the total thickness of the film. The second middle layer of the multilayer film is a layer of polypropylene copolymer with a thickness of 40% to 80% of the total thickness of the multilayer film. The third outer surface layer of the multilayer film is a layer of polypropylene copolymer with a thickness of 10% to 30% of the total thickness of the film. The density of the polypropylene material of all film layers is from 0.9 to 0.91 g/cm³. The multilayer film according to this known solution contains a barrier on the external surface layer of polypropylene copolymer in the form of an aluminium oxide layer. In a preferred example of this solution, the aluminium oxide layer on the external surface of the third layer is 1 angstrom to 100 angstrom thick. The first film layer comprises an anti-blocking additive in the amount of 0.1% to 4% of the weight of the first layer. The third film layer may also comprise an anti-blocking additive in the amount of 0.1% to 12% of the weight of the film layer. Said anti-blocking additive in this known solution is synthetic silica. The method for producing this known multilayer barrier film consists in that polypropylene copolymer granulate is fed to at least two extruders, where said polypropylene copolymer granulate in the first extruder is heated to a temperature of 225°C to 255°C, and the polypropylene copolymer granulate in the second extruder is heated to a temperature of 240°C to 270°C. However, polypropylene homopolymer granulate is fed to the third extruder, and in the third extruder the homopolymer is heated to a temperature of 225°C to 255°C. The molten granulate is then co-extruded through a multipath slot, and a multilayer film is obtained at the exit of the multipath slot. The obtained multilayer film is collected and cooled on a take-up roller assembly, and then the film is wound onto a final take-up roller and seasoned. The film is then cut to the desired size. The roller with a roll of a cut-to-size multilayer film, according to this known solution, in the next stage is transferred to a sputtering chamber and by winding the film on a guide roller system, the outer surface of the film is sputtered with an aluminium layer. During sputtering, a mixture of oxygen and argon is fed between the aluminium vapour and the outer surface of the film. During the sputtering process, negative pressure is maintained inside the sputtering chamber. The film produced on the take-up roller is seasoned for 12 to 48 hours at room temperature before being put in the sputtering chamber.

In another solution, known from international application No. WO 2018/007025, a deep-drawable packaging film comprises an aluminium layer as a core layer and comprises on an outer side of the aluminium foil a semi-crystalline PET film that is laminated to the aluminium foil using an adhesive layer.

According to another solution, known from international application WO 2014/029729, a tray for foodstuffs comprises a first inner polymer layer, a second polymer layer and an outer aluminium layer. The first inner polymer layer has a thickness in a range from 200 to 400µm, the second polymer layer has a thickness in a range from 20 to 40 µm and the outer aluminium layer has a thickness in a range from 40 to 80 µm).

Another solution known from international application WO 2012/136318 concerns a laminated film for production of moulded packaging, in particular blister packs. The layered structure comprises an inner first plastic layer of HDPE, an aluminium layer which is connected with the first plastic layer by way of a connecting layer and on the side opposite the first plastic layer is connected preferably by way of a primer layer and a further connecting layer to a second plastic layer. The second plastic layer is connected to a PET layer by way of a connecting layer.

Another solution known from the publication of international application WO 98/51494 relates to an oriented, especially biaxially oriented, sealable multilayer film which is vacuum-coated with aluminium. The film has a layered structure in which the core layer comprises isotactic polypropylene. The base layer for vacuum coating comprises 0.01 to 0.5 % of organic or inorganic anti-caking agents which exhibit good bonding to aluminium and 99.5 to 99.99 % of an olefinic homo- or terpolymer or a mixture of said olefinic polymers, and is subjected to corona-discharge, plasma or flame pretreatment or pretreatment with fluorine before vacuum coating. The vacuum aluminium layer reduces the transmission of light by the factor of 1/50 to 1/500. The sealable layer in this known solution comprises an olefinic homo- or terpolymer.

The method of coating a plastic film, according to the invention, is presented in claim 1.

The method of coating an aluminium oxide sputtered film consists in that a film with a high-barrier aluminium oxide sputtered coating is coated in a rotogravure process with a coating of a protective substance and increasing the barrier properties of sputtered aluminium oxides. The protective substance for creating the protective coating is a mixture of a solid in the form of urethane compounds in the amount of 5% to 50% and water in the amount of 50% to 95%. The film is then heated to evaporate excess water. The method is characterised in that before the coating process, isopropyl alcohol in the amount of 1% to 15% and an adhesion promoter in the amount of 0.5% to 5% are added to the mixture of the protective substance, where the adhesion promoter is a mixture of 3-(2,3-epoxypropyl)-propyltrimethoxysilane with methanol in the ratio of 97:3 to 99.5:0.5, and then, after coating, the film with the coating substance applied is heated at a temperature from 100°C to 110°C.

In a preferred example of the solution according to the invention, after heating, the film coated with a dried layer of the substance is seasoned at a temperature from 35°C to 65°C for 24 to 160 hours.

The aluminium oxide coating is relatively brittle and fragile. It is, therefore, protected with protective coatings. Work on improving this solution is aimed at improving the resistance of this type of coating, in particular increasing the adhesion forces of the applied protective coating to the aluminium oxide layer, but also at simplifying the technology of applying the said layer. The problem with the protection of aluminium oxide sputtered coatings is, therefore, better mechanical protection of sputtered aluminium oxides, increasing adhesion between the aluminium oxide layer and the applied coating and facilitating the coating process.

In the solution according to the invention, 3- (2,3-epoxypropyl)-propyltrimethoxysilane, mixed with methanol in the given proportions was proposed as an additive to the protective mixture used to create a protective coating. It was found that the mechanical resistance of the produced coating and the entire sputtered film with the coating improved as a result of increased adhesion forces. Regardless of that, isopropyl alcohol was added to the mixture, which accelerated the drying process, i.e. water evaporation from the produced coating after its application.

The subject of the invention is shown below in an example, illustrating an example of the method of coating an aluminium oxide sputtered plastic film intended for food applications.

The method relates to a technology of coating sputtered plastic films, including polyethylene, polypropylene, polyester or polyamide films used for the packaging of the food products listed in more detail above. In this example, the base film is BOPET film - a biaxially oriented polyester film. In this example, the BOPET film is 12 µm thick and comprises a 35 angstrom thick (0.0035 µm) sputtered aluminium oxide layer. In this example, the film is coated with a protective layer according to the invention. Without this protective layer, the AlOₓ aluminium oxide coating is relatively fragile and brittle. In this example, the film is coated in a known technology with a layer of AlOₓ aluminium oxide in the form of Al₂O₃.

In the technology, according to the invention, the present film is coated with a protective layer applied to said aluminium oxide layer. The coating process is carried out using a rotogravure method consisting in that the aluminium oxide film is moved between two rollers. The upper roller is a pressure roller, and the lower roller contains an engraved peripheral surface limited by two outermost peripheral flanges. The lower part of the engraved roller is immersed in a container with a film-coating substance. Both rollers rotate in opposite directions, pulling the film in the direction of rotation of the roller assembly. The film is directed with an aluminium oxide sputtered surface to the surface of the lower roller from which, by way of adhesion, it accumulates a layer of a semi-liquid substance, which, after drying, comprises a protective coating of said aluminium oxide layer. This process is shown below.

The main rotogravure roller is engraved in such a way that its central cylindrical portion has a diameter smaller by two thicknesses of the semi-liquid substance layer. In the outermost parts of the roller, on both sides during the engraving of the central cylindrical portion, flanges with a width of 1 cm were left in this example. The thickness of the accumulated semi-liquid substance is regulated by a doctor blade, the edge of which, during the rotation of the roller, rests on both flanges of the main roller. The aluminium oxide sputtered film is coated with the semi-liquid protective substance from the container through the main roller. The main roller works with the cylindrical pressure roller whose edges roll over the surface of the main roller flanges in the working cycle. In this device, the film pulled between the main and pressure rollers is covered with a layer of a semi-liquid protective substance with a thickness controlled between the surface of the pressure roller and the surface of the cylindrical portion of the main roller. The amount of the layer applied in this example is 5.5 g/m². In this example, the protective substance for creating a coating on the surface of the film from the side sputtered with aluminium oxides is a mixture of a solid in the form of urethane compounds: propanoic acid,3-hydroxy-2-(hydroxymethyl)-2-methyl,- with 2-[(2-aminoethyl)amino]ethanol, 1,3-bis(isocyanatomethyl)benzene, 1,2ethanediol,2-ethyl-2-(hydroxymethyl)-1,3-propanediol and 1,1'-methylenebis[4-isocyanatocyclohexane], ammonium salt, together with N,N-diethylethanamine, in the amount of 25%. The remaining content of the mixture is water, in this example in the amount of 75%.

Before the start of the coating process described above, isopropyl alcohol is added to the mixture of the protective substance, in this example in the amount of 10% by weight relative to the weight of the mixture.

In this example, an adhesion promoter in the amount of 2.5% relative to the weight of the prepared mixture with water was also added to the mixture before the start of the coating process. In this example, the adhesion promoter is a mixture of 3-(2,3-epoxypropyl) -propyltrimethoxysilane mixed with methanol in the ratio from 98.5 parts by weight of 3-(2,3-epoxypropyl)-propyltrimethoxysilane: 1.5 parts by weight of methanol.

The film with the applied coating substance removed from the main roll and the press roll is then heated in this example at 107°C for 1.5 seconds. The purpose of heating is to evaporate water from the water mixture with the coating substance.

After the heating stage, the film coated with a dried layer of the protective substance is seasoned at 50°C for 80 hours in this example.

## Claims

1. The method of coating an aluminium oxide sputtered plastic film, where a film with a high-barrier aluminium oxide sputtered coating is coated in a rotogravure process with a coating of a protective substance and increasing the barrier properties of a layer of sputtered aluminium oxides, wherein the protective substance is a mixture of a solid in the form of urethane compounds in the amount of 5% to 50% and water in the amount of 50% to 95%, and the film is then heated to evaporate excess water, **characterised in that** before the coating process, isopropyl alcohol in the amount of 1% to 15% and an adhesion promoter in the amount of 0.5% to 5% are added to the mixture of the protective substance and water, where the adhesion promoter is a mixture of 3-(2,3-epoxypropyl)-propyltrimethoxysilane with methanol in the ratio of 97:3 to 99.5:0.5, and then the film with the coating substance applied is heated at a temperature from 100°C to 110°C for 0.5 to 5 seconds.

2. The method according to claim 1, **characterised in that**, after heating, the film coated with a dried layer of the protective substance is seasoned at a temperature from 35°C to 65°C for 24 to 160 hours.
